# EUROPEAN PATENT SPECIFICATION

(11) **EP 4 252 926 B1**
(45) Date of publication and mention of the grant of the patent: **29.01.2025**
(21) Application number: 23157874.1
(22) Date of filing: 21.02.2023
(51) Int. Cl.: B08B 1/00

(54) **JOINT FOR COUPLING A FIRST OBJECT AND A SECOND OBJECT TO EACH OTHER**
VERBINDUNG ZUM KOPPELN EINES ERSTEN OBJEKTS MIT EINEM ZWEITEN OBJEKT
ARTICULATION POUR COUPLER UN PREMIER OBJET ET UN SECOND OBJET L'UN À L'AUTRE

(43) Date of publication of application: 04.10.2023
(73) Proprietor: CUSTOMARE PRODUCTION OY, 20320 Turku (FI)
(72) Inventor: LAITINEN, Kimmo, 20100 Turku (FI)
(74) Representative: Laine IP Oy

(56) References cited:
- EP-A1- 3 804 866
- WO-A1-2018/142389

## Description

### FIELD

The present invention relates to a joint for coupling a first object and a second object to each other. The joint is particularly designed for coupling objects to each other that are simultaneously movable along a guiding.

Additionally, the present invention relates to an arrangement comprising a first object, a second object, a guiding and a joint.

### BACKGROUND

In various applications, objects are simultaneously moved along a plurality of guidings. For example, document EP 3804866 A1 discloses a cleaning system comprising a first guiding configured to be coupled to a ship, a second guiding configured to be coupled to the ship such that the second guiding is arranged at a distance from the first guiding, a third guiding configured to be coupled to the ship such that the third guiding is arranged at a distance from the first guiding and the second guiding. A first part is movably coupled to the first guiding, a second part is movably coupled to the second guiding, a third part is coupled to the second part, and a fourth part is movably coupled to the third guiding. The second part and the third part are coupled to each other via a joint in the area of the second guiding. The first part is further movable relative to the second part and the third part is movable relative to the fourth part. Cleaning elements are coupled to each of the first part, the second part, the third part and the fourth part. The system further comprises a drive system configured to simultaneously move the first part, the second part, the third part and the fourth part along the first guiding, the second guiding and the third guiding. The parts of the cleaning system are e.g. configured to simultaneously move over a curved window surface along the plurality of guidings in order to clean the curved window surface. The cleaning system is further described in paragraphs [0027] to [0034] of EP 3804866 A1, which are herewith incorporated by reference.

In view of the foregoing, it would be beneficial to provide a joint for coupling a first object and a second object in the area of a guiding to each other. For example, it would be beneficial to provide a new joint for a cleaning system as disclosed above, i.e. a joint configured to couple a part of a cleaning system to another part of the cleaning system in the area of a guiding. However, the new joint should preferably not be limited for being utilized in only cleaning systems, but instead also be beneficial for other applications.

### SUMMARY OF THE INVENTION

The invention is defined by the features of the independent claims. Some specific embodiments are defined in the dependent claims.

According to a first aspect of the present invention, there is provided a joint for coupling a first object and a second object to each other, the joint comprising a sledge configured to be movably coupled to a guiding, a saddle coupled to the sledge, an elongated structure protruding from the saddle, a first connector extending from the elongated structure to a first coupler configured to be coupled to the first object, a second connector extending from the elongated structure to the first coupler, wherein the second connector is spaced apart from the first connector, a first joint structure connected to the first coupler, a second joint structure connected to the first coupler, a third joint structure connected to a second coupler configured to be coupled to the second object, a fourth joint structure connected to the second coupler, and wherein the first joint structure is hinged to the third joint structure and the second joint structure is hinged to the fourth joint structure.

Various embodiments of the first aspect may comprise at least one feature from the following bulleted list:
- the elongated structure comprises a hollow cylinder and the joint further comprises a braking system comprising a braking pad, a rod attached to the braking pad and guided at least partially through the hollow cylinder, and an actuator capable of moving the rod
- the sledge comprises a plurality of wheels, for example six wheels
- a first pair of wheels is arranged in a first plane, a second pair of wheels is arranged in a second plane and a third pair of wheels is arranged in a third plane
- each of the first coupler and the second coupler is in the form of a hollow cylinder, each capable of engaging with a respective coupling element of the first object and the second object
- the first coupler comprises at least one first boring for fixing a position of the first coupler relative to the first object by a first attachment means
- the second coupler comprises at least one second boring for fixing a position of the second coupler relative to the second object by a second attachment means
- the saddle is movably coupled to the sledge so that the saddle is capable of varying its position around the guiding in both directions in a range between 0 and 15 degrees, in a range between 0 and 20 degrees, in a range between 0 and 25 degrees, or in a range between 0 and 30 degrees
- the sledge comprises a rack and the saddle comprises pinions engaging with the rack, thus forming a rack and pinion mechanism

According to a first aspect of the present invention, there is provided an arrangement comprising a first object and a second object, a guiding, and a joint according to any one of claims 1-9, and wherein the first object is coupled to the first coupler, the second object is coupled to the second coupler and the sledge is coupled to the guiding. According to an embodiment, the arrangement comprises a cleaning system capable of cleaning curved surfaces or a maintenance system.

Considerable advantages are obtained by means of certain embodiments of the present invention. A joint for coupling a first object and a second object to each other is provided, wherein the objects are simultaneously movable along a guiding. The joint is particularly useful for being utilized in connection with a cleaning system for cleaning of curved surfaces, for example for curved glass surfaces of a glass dome of a cruise ship. However, the joint may also be beneficial for other applications, for example for being utilized in connection with a maintenance device capable of installing and removing of glass panels of a glass dome of a cruise ship.

The joint provides sufficient stiffness between two objects hinged to each other by means of the joint. The sledge of the joint automatically finds its optimum position due to its capability of being able to pivot around the guiding. At least one of the first object coupled to a first coupler and the second object coupled to a second coupler can be secured or fixed to the joint by an attachment means in order to allow only a single translational movement of the respective object along the guiding.

According to certain embodiments of the present invention, the sledge of the joint 1 is movable around the guiding in relation to the remaining parts of the joint by an actuator for moving the wheels of the sledge of the joint into a desired position, for example in order to avoid a collision of the wheels with a support structure arranged to support the guiding.

### BRIEF DESCRIPTION OF THE DRAWINGS

FIGURE 1 illustrates a schematic perspective view of a joint in accordance with at least some embodiments of the present invention,
FIGURE 2 illustrates a schematic top view of a joint in accordance with at least some embodiments of the present invention,
FIGURE 3 illustrates a schematic view of components of a joint in accordance with at least some embodiments of the present invention,
FIGURE 4 illustrates a schematic side view of an arrangement in accordance with at least some embodiments of the present invention,
FIGURE 5 illustrates a schematic view of a further joint in accordance with at least some embodiments of the present invention, and
FIGURE 6 illustrates a schematic view of a further arrangement in accordance with at least some embodiments of the present invention.

### EMBODIMENTS

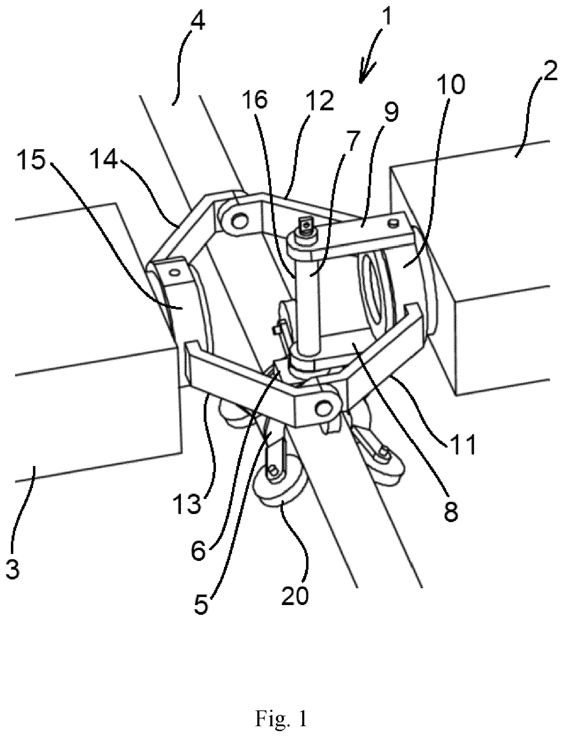

In FIGURE 1 illustrates a schematic view of a joint 1 in accordance with at least some embodiments of the present invention is illustrated. The joint 1 for coupling a first object 2 and a second object 3 to each other comprises a sledge 5 configured to be movably coupled to a guiding 4. The sledge 5 comprises a plurality of wheels 20 and serves as a movable platform for the remaining components of the joint 1. A body of the sledge 5 is typically made of stainless steel or a metal alloy.

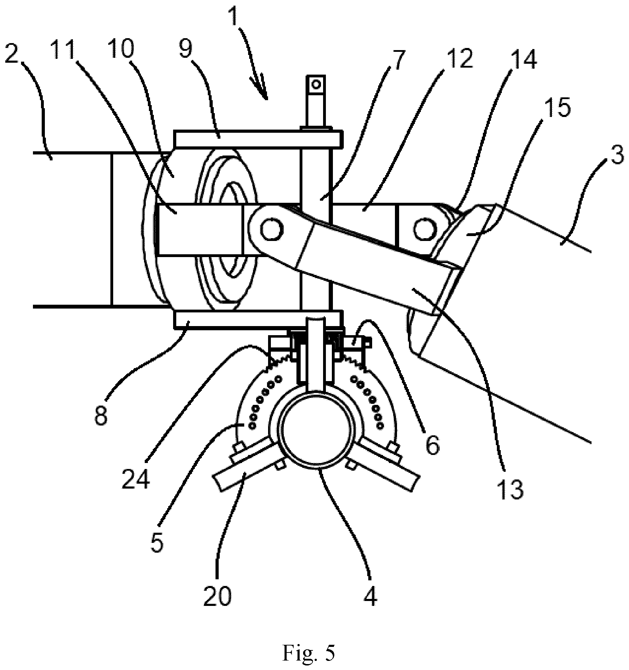

The joint 1 further comprises a saddle 6 coupled to the sledge 5. In the embodiment of FIGURE 1, the saddle 6 is fixedly attached to the sledge 5. For example, the saddle 6 may be arranged between two arch-shaped elements of the sledge 5. FIGURE 5 illustrates another embodiment with a saddle 6 movably attached to the sledge 5. The saddle 6 is typically made of stainless steel or a metal alloy.

An elongated structure 7 protrudes from the saddle 6. It can be seen that the elongated structure 7 extends radially away from the guiding 4. The elongated structure 7 is fixedly attached to the saddle 6. The elongated structure 7 may, for example, comprise a hollow cylinder 16. The hollow cylinder 16 is typically made of stainless steel or a metal alloy.

A first connector 8 is fixedly attached to and extends from the elongated structure 7 to a first coupler 10. The first connector 8 may be, for example, in the form of a plate. The first coupler 10 is configured to be coupled to the first object 2, for example a part of a cleaning system for cleaning a curved surface. A second connector 9 is further fixedly attached to and extends from the elongated structure 7 to the first coupler 10. The second connector 9 may be, for example, in the form of a plate. The second connector 9 is spaced apart from the first connector 8. The second connector 9 may be, for example, arranged parallel to the first connector 8. The first coupler 10 may be, for example, in the form of a hollow cylinder and can be engaged with a portion of the first object 2. Each of the first connector 8, the second connector 9 and the first coupler 10 is typically made of stainless steel or a metal alloy.

The joint 1 further comprises a first joint structure 11 connected to the first coupler 10 and a second joint structure 12 connected to the first coupler 10. The first joint structure 11 and the second joint structure 12 may be, for example, each in the form of an arm, a plate or a similar structure. The first joint structure 11 extends to one side of the elongated structure 7 and the second joint structure 12 extends to the other side of the elongated structure 7. Additionally, a third joint structure 13 is connected to a second coupler 15 configured to be coupled to the second object 3, for example another part of a cleaning system for cleaning a curved surface. Furthermore, a fourth joint structure 14 is connected to the second coupler 15. The third joint structure 13 and the fourth joint structure 14 may be, for example, also each in the form of an arm, a plate or a similar structure. The third joint structure 13 extends to one side of the elongated structure 7 and the fourth joint structure 14 extends to the other side of the elongated structure 7. The first joint structure 11 is hinged to the third joint structure 13 and the second joint structure 12 is hinged to the fourth joint structure 14. The joint 1 is configured such that a hinge axis formed through the two single hinges is arranged parallel or substantially parallel to the guiding 4. The first joint structure 11, the second joint structure 12, the third joint structure 13, the fourth joint structure 14 and the second coupler 15 are typically made of stainless steel or a metal alloy.

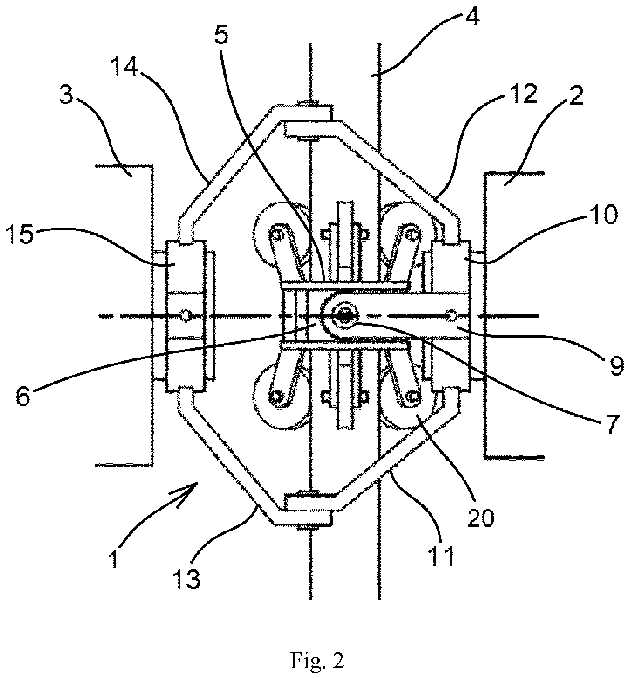

In FIGURE 2 a schematic top view of a joint 1 in accordance with at least some embodiments of the present invention is illustrated. The sledge 5 comprises a plurality of wheels 20 being in contact with the guiding 4 for moving the joint 1 along the guiding 4. The sledge 5 of the shown joint 1 comprises six wheels 20 in total, wherein a first pair of wheels is arranged in a first plane, a second pair of wheels is arranged in a second plane and a third pair of wheels is arranged in a third plane. As a consequence, the joint 1 can only be moved along the guiding 4 and the wheels 20 hold the joint 1 in position in radial direction of the guiding 4.

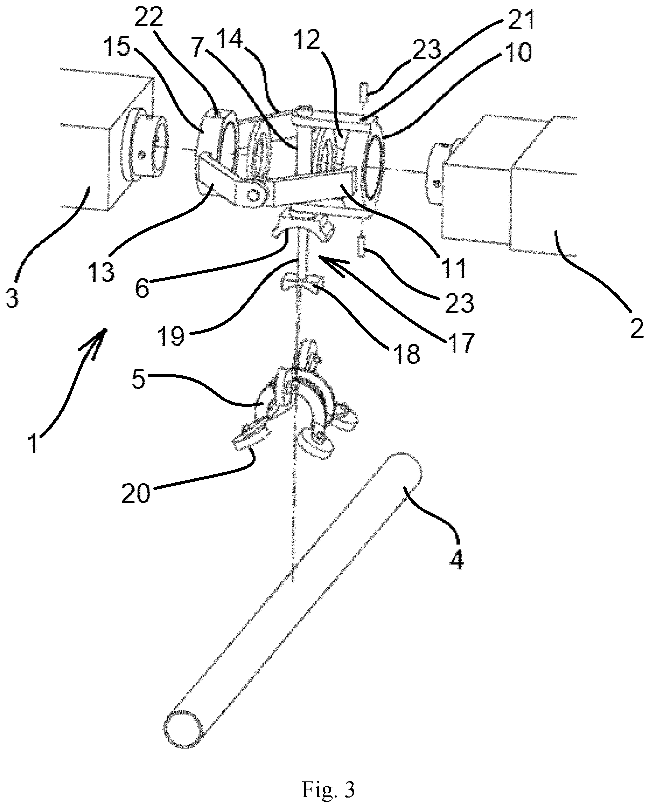

In FIGURE 3 a schematic view of components of a joint 1 in accordance with at least some embodiments of the present invention is illustrated. FIGURE 3 shows elements as described above in connection with FIGURE 1. Additionally, a braking system 17 is shown. The braking system 17 comprises a braking pad 18 configured to be pressed against the guiding 4. The braking pad 18 is connected to a rod 19 which is movable along the elongated structure 7. The movement may be, for example, caused by an actuator (not shown). The actuator is typically arranged on top of the elongated structure 7. The lower surface of the saddle 6 is formed such that the braking pad 18 can be completely embedded or incorporated into the saddle 6 when braking is not required.

Figure 3 further shows an attachment means 23. The attachment means 23 may be, for example, a bolt or a screw. By means of the attachment means 23 arranged in boring 21 the first coupler 10 may be fixed to the first object 2 such that the first object 2 is not able to rotate relative to the joint 1 during movement along the guiding 4. However, a plurality of borings may be provided in the coupling element of the first object 2 so that the first object 2 may be rotated by 90 degrees or 180 degrees and then temporarily fixed by the attachment means 23 during standstill, for example for maintenance purposes. For example, cleaning bristles may be replaced and then the first object 2 may be rotated back again into its original operation position and fixed by the attachment means 23. Similarly, another attachment means (not shown) may be provided for additionally or alternatively fixing the second coupler 15 to the second object 3 such that the second object 3 is not able to rotate relative to the joint 1 during movement along the guiding 4.

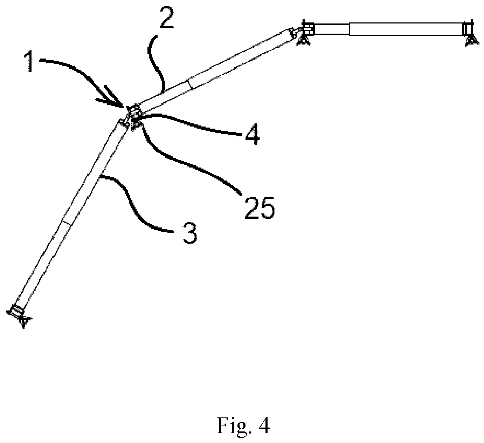

In FIGURE 4 a schematic side view of an arrangement in accordance with at least some embodiments of the present invention. The arrangement comprises a cleaning system, for example for cleaning a glass dome of a ship, and at least one joint 1, in the shown example two joints, in accordance with any one of claims 1-9. Each of said two joints 1 in the centre of the cleaning system is movably coupled to a respective guiding 4 which is fixedly attached to an object or system, for example to the glass dome of the ship. As can be seen, the joints 1 are particularly beneficial for being used in connection with moving the cleaning system along curved surfaces.

In FIGURE 5 a schematic view of a further joint 1 in accordance with at least some embodiments of the present invention is illustrated. FIGURE 5 shows elements as described above in connection with the joint of any one of FIGURES 1 to 3. Additionally, the sledge 5 of the joint 1 comprises a rack in at least one of its upper arch-shaped surfaces. The saddle 6 of the joint 1 further comprises a plurality of pinions engaging with the rack, thus forming a rack and pinion mechanism 24. Further, an actuator (not shown) is provided for moving the sledge 5 relative to the saddle 6 around the guiding 4 utilizing the rack and pinion mechanism 24. As a consequence, the sledge 5 can be moved relative to the remaining parts of the joint 1 around the guiding 4 in both directions during movement of the joint 1 along the guiding 4.

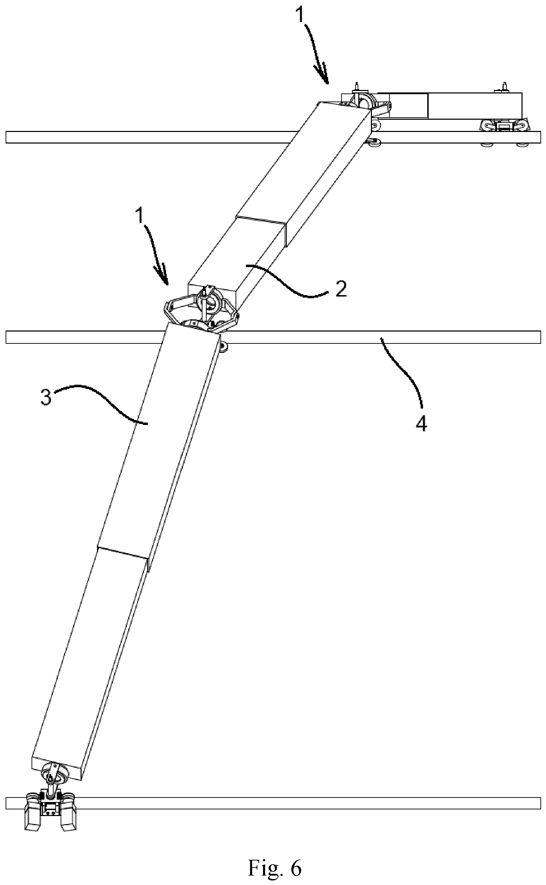

In FIGURE 6 illustrates a schematic view of a further arrangement in accordance with at least some embodiments of the present invention is illustrated. The arrangement comprises a cleaning system, for example for cleaning a glass dome of a ship, and at least one joint 1, in the shown example two joints, as shown and described in connection with FIGURE 5. Each of said two joints 1 in the centre of the cleaning system is movably coupled to a respective guiding 4 which is fixedly attached to an object or system, for example to the glass dome of the ship.

The sledge 5 of each joint 1 comprises a rack in at least one of its upper curved surfaces and the saddle 6 of each joint 1 comprises a plurality of pinions engaging with the rack, thus forming a rack and pinion mechanism 24. Further, an actuator (not shown) is provided for moving the sledge 5 relative to the saddle 6 around the guiding 4 utilizing the rack and pinion mechanism 24. This is particularly beneficial for moving the wheels 20 of each joint 1 into a desired position, for example in order to avoid a collision of the wheels 20 with a support structure 25 arranged to support a respective guiding 4.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in cleaning systems or maintenance systems.

### REFERENCE SIGNS LIST

- 1: joint
- 2: first object
- 3: second object
- 4: guiding
- 5: sledge
- 6: saddle
- 7: elongated structure
- 8: first connector
- 9: second connector
- 10: first coupler
- 11: first joint structure
- 12: second joint structure
- 13: third joint structure
- 14: fourth joint structure
- 15: second coupler
- 16: hollow cylinder
- 17: braking system
- 18: braking pad
- 19: rod
- 20: wheel
- 21: first boring
- 22: second boring
- 23: attachment means
- 24: rack and pinion mechanism
- 25: support structure

### CITATION LIST

### Patent Literature

EP 3804866 A1

Non Patent Literature

## Claims

1. A joint (1) for coupling a first object (2) and a second object (3) to each other, the joint (1) comprising:
- a sledge (5) configured to be movably coupled to a guiding (4),
- a saddle (6) coupled to the sledge (5),
- an elongated structure (7) protruding from the saddle (6),
- a first connector (8) extending from the elongated structure (7) to a first coupler (10) configured to be coupled to the first object (2),
- a second connector (9) extending from the elongated structure (7) to the first coupler (10), wherein the second connector (9) is spaced apart from the first connector (8),
- a first joint structure (11) connected to the first coupler (10),
- a second joint structure (12) connected to the first coupler (10),
- a third joint structure (13) connected to a second coupler (15) configured to be coupled to the second object (3),
- a fourth joint structure (14) connected to the second coupler (15),
- and wherein the first joint structure (11) is hinged to the third joint structure (13) and the second joint structure (12) is hinged to the fourth joint structure (14).

2. The joint (1) according to claim 1, wherein the elongated structure (7) comprises a hollow cylinder (16) and the joint (1) further comprises a braking system (17) comprising a braking pad (18), a rod (19) attached to the braking pad (18) and guided at least partially through the hollow cylinder (16), and an actuator capable of moving the rod (19).

3. The joint (1) according to claim 1 or 2, wherein the sledge (5) comprises a plurality of wheels (20).

4. The joint (1) according to claim 3, wherein a first pair of wheels (20) is arranged in a first plane, a second pair of wheels (20) is arranged in a second plane and a third pair of wheels (20) is arranged in a third plane.

5. The joint (1) according to any of claims 1-4, wherein each of the first coupler (10) and the second coupler (15) is in the form of a hollow cylinder, each capable of engaging with a respective coupling element of the first object (2) and the second object (3).

6. The joint (1) according to any of claims 1-5, wherein the first coupler (10) comprises at least one first boring (21) for fixing a position of the first coupler (10) relative to the first object (2) by a first attachment means (23).

7. The joint (1) according to any of claims 1-6, wherein the second coupler (15) comprises at least one second boring (22) for fixing a position of the second coupler (15) relative to the second object (3) by a second attachment means (23).

8. The joint (1) according to any of claims 1-7, wherein the saddle (6) is movably coupled to the sledge (5) so that the saddle (6) is capable of varying its position around the guiding (4) in both directions in a range between 0 and 15 degrees, in a range between 0 and 20 degrees, in a range between 0 and 25 degrees, or in a range between 0 and 30 degrees.

9. The joint (1) according to claim 8, wherein the sledge (5) comprises a rack and the saddle (6) comprises pinions engaging with the rack, thus forming a rack and pinion mechanism (24).

10. An arrangement comprising:
- a first object (2) and a second object (3),
- a guiding (4), and
- a joint (1) according to any one of claims 1-9,
- and wherein the first object (2) is coupled to the first coupler (10), the second object (3) is coupled to the second coupler (15) and the sledge (5) is coupled to the guiding (4).

11. The arrangement according to claim 10, wherein the arrangement comprises a cleaning system capable of cleaning curved surfaces or a maintenance system.

## Patentansprüche

1. Verbindung (1) zum Koppeln eines ersten Objekts (2) und eines zweiten Objekts (3) miteinander, wobei die Verbindung (1) umfasst:
- einen Schlitten (5), welcher so konfiguriert ist, dass er beweglich mit einer Führung (4) gekoppelt ist,
- einen mit dem Schlitten (5) gekoppelten Sattel (6),
- eine längliche Struktur (7), welche aus dem Sattel (6) hervorsteht,
- einen ersten Verbinder (8), welcher sich von der länglichen Struktur (7) zu einem ersten Koppler (10) erstreckt, welcher so konfiguriert ist, dass er mit dem ersten Objekt (2) gekoppelt werden kann,
- einen zweiten Verbinder (9), welcher sich von der länglichen Struktur (7) zu dem ersten Koppler (10) erstreckt, wobei der zweite Verbinder (9) von dem ersten Verbinder (8) beabstandet ist,
- eine erste Gelenkstruktur (11), welche mit dem ersten Koppler (10) verbunden ist,
- eine zweite Gelenkstruktur (12), welche mit dem ersten Koppler (10) verbunden ist,
- eine dritte Gelenkstruktur (13), welcher mit einem zweiten Koppler (15) verbunden ist, welche so konfiguriert ist, dass sie mit dem zweiten Objekt (3) gekoppelt werden kann,
- eine vierte Gelenkstruktur (14), welche mit dem zweiten Koppler (15) verbunden ist,
- und wobei die erste Gelenkstruktur (11) mit der dritten Gelenkstruktur (13) gelenkig verbunden ist und die zweite Gelenkstruktur (12) mit der vierten Gelenkstruktur (14) gelenkig verbunden ist.

2. Verbindung (1) nach Anspruch 1, wobei die längliche Struktur (7) einen Hohlzylinder (16) umfasst und die Verbindung (1) weiter ein Bremssystem (17) umfasst, welches einen Bremsbelag (18), eine Stange (19), welche an dem Bremsbelag (18) angebracht und zumindest teilweise durch den Hohlzylinder (16) geführt ist, und eine Betätigungsvorrichtung umfasst, welche die Stange (19) bewegen kann.

3. Verbindung (1) nach Anspruch 1 oder 2, wobei der Schlitten (5) eine Vielzahl von Rädern (20) umfasst.

4. Verbindung (1) nach Anspruch 3, wobei ein erstes Paar Räder (20) in einer ersten Ebene angeordnet ist, ein zweites Paar Räder (20) in einer zweiten Ebene angeordnet ist und ein drittes Paar Räder (20) in einer dritten Ebene angeordnet ist.

5. Verbindung (1) nach einem der Ansprüche 1-4, wobei der erste Koppler (10) und der zweite Koppler (15) jeweils die Form eines Hohlzylinders aufweisen und jeweils mit einem entsprechenden Kopplungselement des ersten Objekts (2) und des zweiten Objekts (3) in Eingriff gebracht werden können.

6. Verbindung (1) nach einem der Ansprüche 1-5, wobei der erste Koppler (10) zumindest eine erste Bohrung (21) zum Fixieren einer Position des ersten Kopplers (10) relativ zu dem ersten Objekt (2) durch ein erstes Befestigungsmittel (23) umfasst.

7. Verbindung (1) nach einem der Ansprüche 1-6, wobei der zweite Koppler (15) zumindest eine zweite Bohrung (22) zum Fixieren einer Position des zweiten Kopplers (15) relativ zu dem zweiten Objekt (3) durch ein zweites Befestigungsmittel (23) umfasst.

8. Verbindung (1) nach einem der Ansprüche 1-7, wobei der Sattel (6) beweglich mit dem Schlitten (5) gekoppelt ist, sodass der Sattel (6) seine Position in beide Richtungen in einem Bereich zwischen 0 und 15 Grad, in einem Bereich zwischen 0 und 20 Grad, in einem Bereich zwischen 0 und 25 Grad oder in einem Bereich zwischen 0 und 30 Grad um die Führung (4) variieren kann.

9. Verbindung (1) nach Anspruch 8, wobei der Schlitten (5) eine Zahnstange umfasst und der Sattel (6) Ritzel umfasst, welche in die Zahnstange eingreifen, wodurch ein Zahnstangengetriebe (24) gebildet wird.

10. Anordnung, umfassend:
- ein erstes Objekt (2) und ein zweites Objekt (3),
- eine Führung (4) und
- eine Verbindung (1) nach einem der Ansprüche 1-9,
- und wobei das erste Objekt (2) mit dem ersten Koppler (10) gekoppelt ist, das zweite Objekt (3) mit dem zweiten Koppler (15) gekoppelt ist und der Schlitten (5) mit der Führung (4) gekoppelt ist.

11. Anordnung nach Anspruch 10, wobei die Anordnung ein Reinigungssystem, welches gekrümmte Oberflächen reinigen kann, oder ein Wartungssystem umfasst.

## Revendications

1. Articulation (1) pour coupler un premier objet (2) et un second objet (3) l'un à l'autre, l'articulation (1) comprenant :
- un traîneau (5) configuré pour être couplé de manière mobile à un guide (4),
- une selle (6) couplée au traîneau (5),
- une structure allongée (7) faisant saillie depuis la selle (6),
- un premier connecteur (8) s'étendant depuis la structure allongée (7) jusqu'à un premier coupleur (10) configuré pour être couplé au premier objet (2),
- un second connecteur (9) s'étendant depuis la structure allongée (7) jusqu'au premier coupleur (10), dans lequel le second connecteur (9) est espacé du premier connecteur (8),
- une première structure d'articulation (11) reliée au premier coupleur (10),
- une deuxième structure d'articulation (12) reliée au premier coupleur (10),
- une troisième structure d'articulation (13) reliée à un second coupleur (15) configuré pour être couplé au second objet (3),
- une quatrième structure d'articulation (14) reliée au second coupleur (15),
- et dans laquelle la première structure d'articulation (11) est articulée sur la troisième structure d'articulation (13) et la deuxième structure d'articulation (12) est articulée sur la quatrième structure d'articulation (14).

2. Articulation (1) selon la revendication 1, dans laquelle la structure allongée (7) comprend un cylindre creux (16) et l'articulation (1) comprend en outre un système de freinage (17) comprenant un patin de freinage (18), une tige (19) fixée au patin de freinage (18) et guidée au moins partiellement à travers le cylindre creux (16), et un actionneur qui permet de déplacer la tige (19).

3. Articulation (1) selon la revendication 1 ou 2, dans laquelle le traîneau (5) comprend une pluralité de roues (20).

4. Articulation (1) selon la revendication 3, dans laquelle une première paire de roues (20) est agencée dans un premier plan, une deuxième paire de roues (20) est agencée dans un deuxième plan et une troisième paire de roues (20) est agencée dans un troisième plan.

5. Articulation (1) selon l'une quelconque des revendications 1-4, dans laquelle chacun du premier coupleur (10) et du second coupleur (15) se présente sous la forme d'un cylindre creux, chacun permettant de venir en prise avec un élément de couplage respectif du premier objet (2) et du second objet (3).

6. Articulation (1) selon l'une quelconque des revendications 1-5, dans laquelle le premier coupleur (10) comprend au moins un premier alésage (21) pour fixer une position du premier coupleur (10) par rapport au premier objet (2) au moyen d'un premier moyen de fixation (23).

7. Articulation (1) selon l'une quelconque des revendications 1-6, dans laquelle le second coupleur (15) comprend au moins un second alésage (22) pour fixer une position du second coupleur (15) par rapport au second objet (3) au moyen d'un second moyen de fixation (23).

8. Articulation (1) selon l'une quelconque des revendications 1-7, dans laquelle la selle (6) est couplée de manière mobile au traîneau (5) de sorte que la selle (6) permette de faire varier sa position autour du guide (4) dans les deux sens dans une plage entre 0 et 15 degrés, dans une plage entre 0 et 20 degrés, dans une plage entre 0 et 25 degrés, ou dans une plage entre 0 et 30 degrés.

9. Articulation (1) selon la revendication 8, dans laquelle le traîneau (5) comprend une crémaillère et la selle (6) comprend des pignons s'engrenant avec la crémaillère, ce qui permet de former un mécanisme à crémaillère et pignon (24).

10. Agencement, comprenant :
- un premier objet (2) et un second objet (3),
- un guide (4), et
- une articulation (1) selon l'une quelconque des revendications 1-9,
- et dans lequel le premier objet (2) est couplé au premier coupleur (10), le second objet (3) est couplé au second coupleur (15) et le traîneau (5) est couplé au guide (4).

11. Agencement selon la revendication 10, dans lequel l'agencement comprend un système de nettoyage qui permet de nettoyer des surfaces courbes ou un système de maintenance.
